# FASCICULE DE BREVET EUROPEEN

(11) **EP 1 950 428 B1**
(45) Date de publication et mention de la délivrance du brevet: **27.03.2013**
(21) Numéro de dépôt: 08100796.5
(22) Date de dépôt: 23.01.2008
(51) Int. Cl.: F15B 15/28, G01D 11/30, G01D 5/22

(54) **Dispositif de mesure de la position d'un piston dans un cylindre, ensemble d'un cylindre, d'un piston et d'un tel dispositif et moteur d'aéronef comprenant un tel ensemble**
Vorrichtung zur Positionsmessung eines Ventils in einem Zylinder, Einheit bestehend aus einem Zylinder, einem Ventil und dieser Vorrichtung sowie Luftfahrzeugmotor, der diese Einheit umfasst
Device for measuring the position of a piston in a cylinder, assembly including a cylinder, a piston and one such device and aircraft engine comprising such an assembly

(30) Priorité: 29.01.2007 FR 0700596
(43) Date de publication de la demande: 30.07.2008
(73) Titulaire: SNECMA, 75015 Paris (FR)
(72) Inventeur: Leclerc, Henry- Roger, 91260, JUVISY SUR ORGE (FR); Kettler, Daniel, 77590, CHARTRETTES (FR); Bares, Jean-Paul, 77950, MAINCY (FR)
(74) Mandataire: David, Daniel

(56) Documents cités:
- DE-A1- 3 123 572
- DE-A1- 10 337 599
- FR-A1- 2 594 515
- US-A1- 2006 208 724

## Description

L'invention concerne le domaine des capteurs de position, pour la mesure de la position d'un piston dans un cylindre, notamment ceux utilisés sur les moteurs d'aéronefs.

Un capteur de position, tel qu'un capteur actif (inductif) de déplacement linéaire, plus connu par l'homme du métier sous son acronyme anglais LVDT, qui signifie « Linear Variable Differential Transformer », permet de déterminer la position longitudinale d'un piston dans un cylindre.

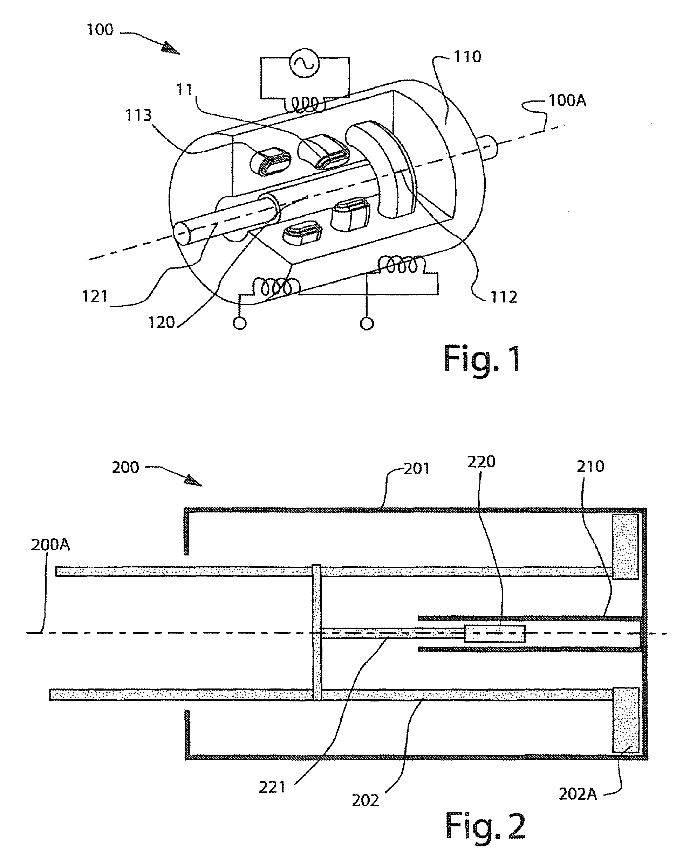

En référence à la figure 1, un capteur 100 de type LVDT comprend un noyau ferromagnétique mobile 120, fixé sur une tige 121 d'axe 100A, et un transformateur fixe 110, formé de trois bobines cylindriques et coaxiales avec l'axe 100A de la tige 121, définissant un enroulement primaire 111 et deux enroulements secondaires 112, 113. En fonctionnement, la tige 121 est déplacée en translation sur son axe 100A. Le noyau 120 génère dans les enroulements 111, 112, 113, par induction magnétique, une tension entre les enroulements, qui est proportionnelle à la position du noyau ferromagnétique 120 dans le transformateur 110. On en déduit ainsi la position de la tige 21 dans le capteur.

En référence à la figure 2, il est connu d'utiliser un capteur de type LVDT dans un vérin 200. Un tel vérin 200 comporte un cylindre 201, s'étendant selon un axe 200A, dans lequel s'étend un piston 202, mobile en translation sur l'axe 200A. Le piston 202 comporte, à son extrémité aval, une tête de piston 202A dont le diamètre externe correspond au diamètre interne du cylindre 201, dans lequel elle est guidée, de manière classique.

Dans la suite de la description, les notions amont et aval sont définies par rapport au piston 202. Celui-ci est soumis à une force d'entraînement à son extrémité amont, sa partie aval se déplaçant dans le cylindre 201. Autrement dit, l'amont est situé du côté du cylindre 201 par lequel sort le piston 202.

Le transformateur 210 du capteur de type LVDT est fixé à l'extrémité aval du cylindre 201, l'axe du transformateur 210 coïncidant avec l'axe 200A du cylindre 201. Le noyau ferromagnétique 220 du capteur est monté sur une tige 221 solidaire du piston 202 et s'étendant suivant l'axe 200A.

Le noyau 220 étant solidaire du piston 202 et le transformateur 210 étant solidaire du cylindre 201, la position du piston 202 dans le cylindre 201 se déduit de la mesure de la position du noyau 220 dans le transformateur 210.

Dans le domaine de l'aéronautique, les normes de sécurité imposent un niveau de fiabilité élevé pour les équipements de mesure et de contrôle. Ainsi, pour la mesure de la position d'un piston dans un cylindre de vérin, il est nécessaire de prévoir deux capteurs LVDT dans le vérin, afin qu'en cas de défaillance de l'un des capteurs, l'autre capteur effectue les mesures.

On connaît, par le brevet FR2594515, un dispositif de mesure de la position d'un piston dans un cylindre de vérin comprenant deux capteurs de position de type LVDT.

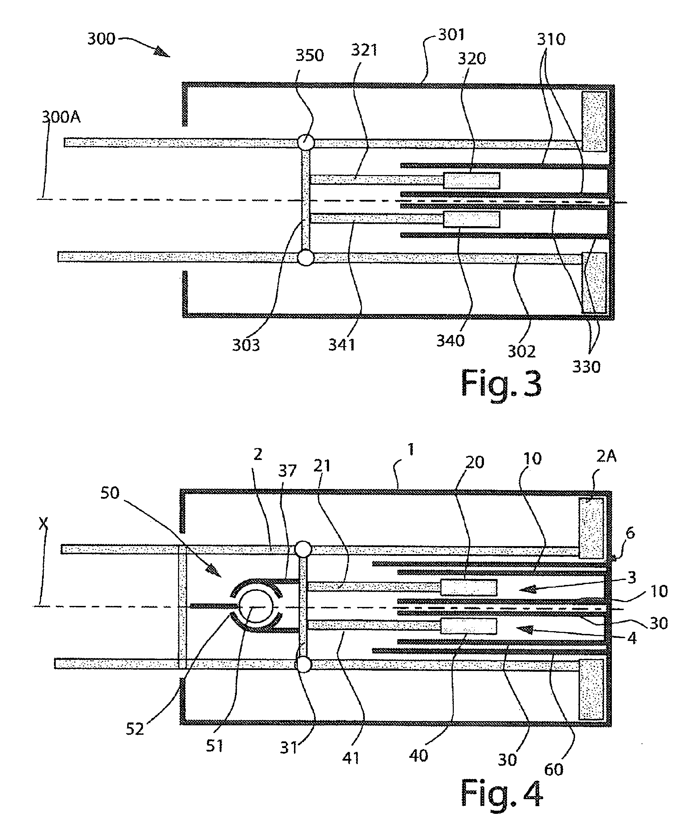

La figure 3 représente une vue en coupe fonctionnelle schématique d'un tel dispositif, agencé sur un vérin 300 comprenant un piston 302, mobile dans un cylindre 301, d'axe 300A. Une palette de maintien 303 est fixée transversalement dans le piston 302, qui est creux. Les noyaux 320, 340 des capteurs sont montés sur deux tiges 321, 341, fixées à leur extrémité amont sur la face aval de la palette 303. Les tiges 321, 341 s'étendent parallèlement à l'axe 300A, les noyaux 320, 340 s'étendant respectivement et de manière concentrique à des transformateurs 310, 330, les transformateurs 310, 330 étant fixés à l'extrémité aval du cylindre 301.

Le piston 302 est entraîné en translation sur l'axe 300A. Il doit, par ailleurs, être libre en rotation autour de cet axe 300A. A cet effet, dans le dispositif du brevet FR2594515, un palier circonférentiel 350 est agencé entre la palette 303 et le piston 302, permettant au piston 302 d'être entraîné en rotation autour de l'axe 300A sans communiquer le mouvement de rotation à la palette 303 et aux noyaux 320, 340. Les noyaux 320, 340 demeurent solidaires en translation du piston 302 et alignés avec leur transformateur respectif 310, 330. Les capteurs peuvent donc mesurer la position du piston 302 dans le cylindre 301.

En fonctionnement, le piston 302 est généralement soumis à des forces transversales, qui le font fléchir et peuvent faire fléchir les tiges 321, 341 et les désaxer par rapport à l'axe 300A du cylindre 301. Les noyaux 320, 340 ne sont plus alors centrés par rapport à leur transformateur respectif 310, 330 et sont endommagés, ce qui entraîne une diminution de la durée de vie des capteurs ainsi qu'une moindre précision des mesures.

L'invention vise à proposer un dispositif de mesure de la position d'un piston dans un cylindre, qui puisse comporter deux capteurs de type LVDT pour assurer la fiabilité du dispositif, qui permette au piston d'être libre en rotation autour de son axe et qui ne soit pas endommagé par une éventuelle flexion du piston.

A cet effet, l'invention concerne un dispositif de mesure de la position d'un piston dans un cylindre, s'étendant selon un axe, le dispositif comportant au moins deux capteurs de position, qui comprennent respectivement :
- un premier élément de capteur solidaire d'une palette de maintien reliée au piston,
- un deuxième élément de capteur solidaire du cylindre,
les premier et deuxième éléments de chaque capteur étant agencés pour être mobiles en translation l'un par rapport à l'autre, selon un axe parallèle à l'axe du cylindre, dispositif caractérisé par le fait que les premiers éléments de capteur sont solidaires d'une même palette de maintien qui est reliée au piston par une liaison rotule.

Par liaison rotule, on entend une liaison entre deux éléments, qui comporte trois degrés de liberté en rotation et aucun en translation.

Grâce au dispositif de l'invention, un capteur de position peut-être disposé dans le cylindre, sans que les efforts transversaux sur le piston lui soient transmis, tandis que le piston reste libre en rotation autour de l'axe du cylindre. La mesure de la position du piston dans le cylindre est donc précise, sans risque d'endommagement du capteur.

L'invention résout un problème particulier, né dans les dispositifs à deux capteurs de position, mais elle s'applique également à un dispositif avec plus de deux capteurs.

Par ailleurs, la suppression des paliers, par rapport au dispositif du brevet FR2594515 permet de faciliter l'entretien du dispositif : une rotule est moins sujette à se gripper.

L'invention s'applique particulièrement bien aux vérins, mais elle s'applique, plus généralement, à tout dispositif comportant un cylindre dans lequel s'étend un piston mobile en translation. Ainsi, l'invention s'applique notamment aux doseurs, comportant un piston à deux têtes, entraîné dans un cylindre, pour la régulation d'un débit de fluide. Un tel doseur est décrit plus en détails plus bas.

De préférence, le capteur de position est un capteur de type LVDT. Avantageusement dans ce cas, le premier élément comporte une tige, supportant un noyau ferromagnétique, et le deuxième élément de capteur comporte un transformateur.

De préférence, la liaison rotule comprend une sphère maintenue dans une bride de sphère. La sphère peut être, soit solidaire du piston, soit solidaire du premier élément de capteur.

Selon une autre forme de réalisation, la bride de sphère est sertie dans une pièce solidaire du premier élément du capteur.

L'invention concerne également un ensemble d'un cylindre, d'un piston et d'un dispositif de mesure tel que présenté ci-dessus et un moteur aéronef comprenant un tel ensemble.

L'invention concerne encore un vérin ou un doseur.

L'invention sera mieux comprise à l'aide de la description suivante des formes de réalisation préférées du dispositif de l'invention, en référence au dessin annexé, sur lequel :
la figure 1 représente une vue schématique en perspective, partiellement éclatée, d'un capteur de position de type LVDT ;
la figure 2 représente un schéma fonctionnel d'un dispositif de mesure selon l'art antérieur ;
la figure 3 représente un schéma fonctionnel d'un autre dispositif de mesure selon l'art antérieur ;
la figure 4 représente un schéma fonctionnel d'un dispositif de mesure conforme à l'invention selon le mode de réalisation de la figure 5 ;
la figure 5 représente une vue en coupe d'un vérin avec un dispositif de mesure conforme à l'invention et
la figure 6 représente une vue en coupe d'un vérin avec dispositif de mesure conforme à un autre mode de réalisation de l'invention.

En référence à la figure 4, un vérin comprend un cylindre 1, s'étendant selon un axe X, dans lequel est inséré un piston 2, comportant une tête de piston 2A, dont le diamètre externe correspond au diamètre interne du cylindre 1. Le vérin comporte un dispositif de mesure de la position du piston 2 par rapport au cylindre 1, comportant deux capteurs de position 3, 4 de type LVDT.

Chaque capteur 3, 4 comporte un noyau ferromagnétique 20, 40, coopérant avec un transformateur 10, 30, de la manière décrite précédemment. Les transformateurs 10, 30 sont disposés longitudinalement selon l'axe X dans le cylindre 1, et fixés à l'extrémité aval de celui-ci. Les transformateurs 10, 30 sont enveloppés dans une chemise de protection 60 s'étendant longitudinalement dans le cylindre 1, l'extrémité aval de la chemise 60 étant fixée de manière solidaire à l'extrémité aval du cylindre 1. La chemise 60 s'étend concentriquement à l'intérieur du piston 2, qui comporte, à son extrémité aval, une ouverture 6 de passage de l'enveloppe 60.

Chaque noyau 20, 40 des capteurs 3, 4 est supporté par une tige 21, 41, parallèle à l'axe X et alignée avec le transformateur 10, 30 correspondant, au sein duquel elle est agencée pour s'étendre de manière coaxiale. Les extrémités amont des tiges 21, 41 sont fixées de manière solidaire à la face aval d'une palette de maintien 31, disposée transversalement dans le piston 2. La palette 31 se présente globalement sous la forme d'un disque.

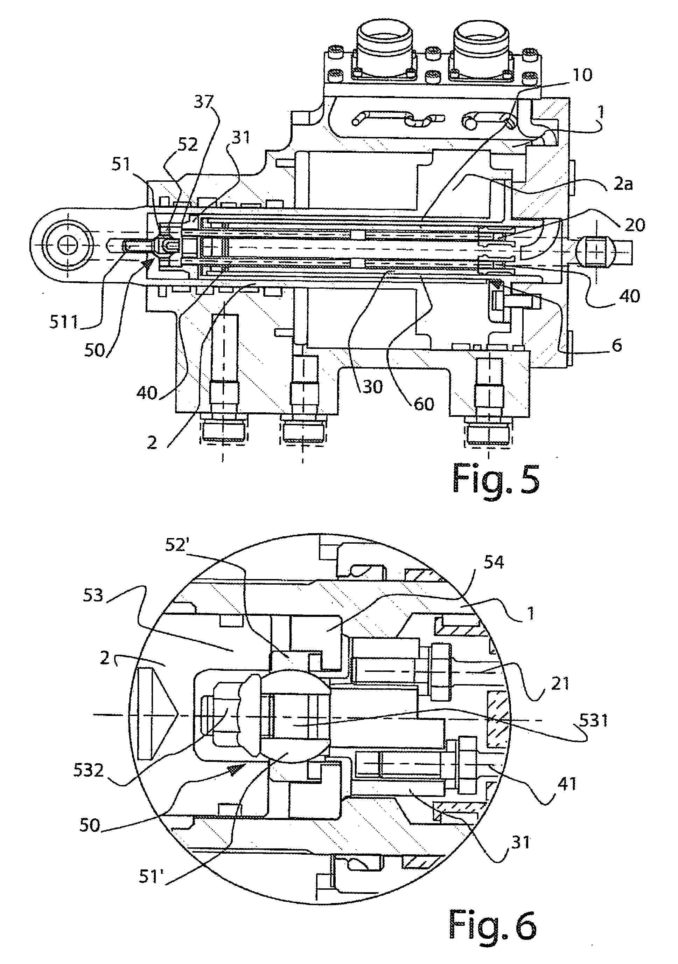

En référence à la figure 5, le piston 2 est creux, c'est-à-dire qu'il se présente sous la forme d'un fourreau s'étendant longitudinalement dans le cylindre 1. La palette 31, supportant les noyaux 20, 40, est reliée au piston 2 par un moyen de liaison, ici une liaison rotule, la liaison étant réalisée à l'intérieur du fourreau formé par le piston 2. Du fait de la liaison rotule 50, la palette 31 est libre en rotation selon trois degrés de liberté par rapport au piston 2, mais elle demeure solidaire de celui-ci en translation sur l'axe X.

La rotule 50 comporte ici une sphère 51, montée dans une bride de sphère 52 se présentant sous la forme d'une enveloppe sphérique. Une telle bride de sphère 52 est aussi connue de l'homme du métier sous la dénomination « cage ». Sa fonction est de maintenir la sphère 51, qui lui est solidaire en translation mais libre en rotation. La sphère 51 est solidaire du piston 2 et la bride 52 est solidaire de la palette 31.

La sphère 51 supporte ici un doigt 511 s'étendant du côté amont et fixé solidairement au piston 2. La bride de sphère 52 est avantageusement sertie dans une portion cylindrique 37 s'étendant longitudinalement vers l'aval à partir de la face amont de la palette 31, les extrémités libres de la portion cylindrique 37 étant rabattues sur la bride de sphère 52 afin de la maintenir fixement.

Après avoir décrit la structure des moyens de l'invention, son fonctionnement et sa mise en oeuvre vont maintenant être abordés.

Lors du fonctionnement du vérin, l'extrémité amont du piston 2 est entraînée en translation sur l'axe X par rapport au cylindre 1. La sphère 51, solidaire du piston 2, se déplace en translation ; elle entraîne la bride de sphère 52, qui lui est solidaire, et donc la palette 31 et les noyaux 20, 40 qu'elle supporte. Les noyaux 20, 40 sont donc entraînés en translation sur l'axe X dans leur transformateur respectif 10, 30, les transformateurs 10, 30 étant solidaires du cylindre 1. La position du piston 2 dans le cylindre 1 se déduit donc de la mesure réalisée par les capteurs 3, 4, de la position des noyaux 30, 40 dans leur transformateur 10, 30.

Le piston 2 est, par ailleurs, libre en rotation autour de son axe X. Lorsqu'il tourne, le piston 2 entraîne la sphère 51, celle-ci tournant librement dans la bride de sphère 52. Aucun mouvement n'est transmis aux noyaux 20, 40, qui demeurent alignés dans leur transformateur respectif 10, 30. La liaison rotule 50 permet donc d'éviter un défaut d'alignement des capteurs 3, 4 lors de la rotation du piston 2 autour de son axe X.

En fonctionnement, des forces transversales peuvent, en outre, être appliquées sur la partie amont du piston 2, entraînant un fléchissement du piston 2. Le fléchissement est compensé par la sphère 51, qui entre en rotation dans la bride de sphère 52. Aucun mouvement n'est transmis aux noyaux 20, 40, qui demeurent alignés dans leur transformateur respectif 10, 30. La liaison rotule 50 permet ainsi de protéger les capteurs 3, 4 lorsque des forces transversales sont appliquées à l'extrémité amont du piston 2.

Lors du fonctionnement du vérin, le piston 2 peut être soumis à des forces engendrant des mouvements de translation, de rotation autour de son axe ou de fléchissement du piston 2. Grâce à la liaison rotule 50, seuls les mouvements de translation sur l'axe X du cylindre 1 sont transmis aux noyaux 20, 40.

La liaison rotule 50 est peu sujette à se gripper, car les poussières sont peu susceptibles de pénétrer à l'intérieur de la bride de sphère 52.

Dans une autre forme de réalisation, en référence à la figure 6, la sphère 51' est solidaire de la palette 31 et la bride de sphère 52' est solidaire du piston 2. La sphère 51' comprend un alésage d'axe X, traversé par une vis 531 dont l'extrémité aval est vissée dans la palette 31 supportant les noyaux 20, 40 des capteurs 3, 4. La vis 531 est serrée à son extrémité amont par un écrou 532 permettant de sécuriser la sphère 51' sur la palette 31.

La bride de sphère 52' est fixée au piston 2, bloquée entre un écrou 53 solidaire du piston 2 et une cale 54, la cale 54 étant rapportée sur la partie aval de la bride de sphère 52'.

L'invention a été présentée en relation avec un vérin, mais elle s'applique à d'autres types de dispositifs comportant un piston mobile en translation dans un cylindre, tels un doseur ou un moteur aéronef comprenant un ensemble d'un cylindre, d'un piston et d'un dispositif de mesure selon l'invention.

Dans un doseur, un piston se déplace en translation dans un cylindre de doseur. Deux orifices radiaux sont ménagés dans le cylindre, définissant respectivement une entrée et une sortie de fluide.

Le piston comporte deux têtes d'obturation dont le diamètre externe correspond au diamètre interne du cylindre, coaxiales et reliées par un arbre entraîné en translation selon l'axe du cylindre. Dans une position de fermeture du doseur, les têtes obstruent complètement les orifices, empêchant toute communication fluidique. Dans une position d'ouverture, le piston est déplacé en translation dans le cylindre du doseur, permettant ainsi une ouverture partielle ou totale des orifices et une communication du fluide de l'entrée vers la sortie. La translation du piston permet donc de « réguler » ou « doser » le débit du fluide.

Afin de déterminer la position du piston, de manière similaire à la forme de réalisation précédente, une palette de maintien est disposée transversalement dans le piston, la palette supportant deux tiges sur lesquelles sont montées respectivement les noyaux de capteurs de position de type LVDT. Les noyaux sont respectivement alignés avec leur transformateur respectif, fixé à l'extrémité aval du cylindre de doseur. Une ouverture est prévue à l'extrémité aval du piston pour le passage des transformateurs. La palette de maintien est reliée au piston par une liaison rotule, la sphère de la rotule étant, par exemple, fixée au piston et la bride de sphère étant fixée à la palette de maintien.

Il va de soi que l'invention s'applique également à des capteurs de proximité, tels qu'un capteur de proximité capacitif de pierro, un capteur de proximité inductif, un capteur à effet Hall ou un capteur de présence ou de proximité infrarouge, par exemple.

## Revendications

1. Dispositif de mesure de la position d'un piston (2) dans un cylindre (1), s'étendant selon un axe, le dispositif comportant au moins deux capteurs de position (3, 4) de type capteur inductif de déplacement linéaire (LVDT), qui comprennent respectivement :
- un premier élément de capteur solidaire d'une palette de maintien (31) reliée au piston (2), le premier élément de capteur comportant une tige (21) supportant un noyau ferromagnétique (20, 40),
- un deuxième élément de capteur solidaire du cylindre (1) comportant un transformateur (10, 30),
les premier et deuxième éléments de chaque capteur étant agencés pour être mobiles en translation l'un par rapport à l'autre, selon un axe parallèle à l'axe du cylindre (1), dispositif **caractérisé par le fait que** les tiges (21) des premiers éléments de capteur (20, 40) sont solidaires d'une même palette de maintien (31) qui est reliée au piston (2) par une liaison rotule (50).

2. Dispositif selon la revendication 1, dans lequel la liaison rotule (50) comprend une sphère (51) maintenue dans une bride de sphère (52).

3. Dispositif selon la revendication 2, dans lequel la bride de sphère (52) est solidaire du premier élément de capteur (20, 40).

4. Dispositif selon la revendication 3, dans lequel la bride de sphère (52) est sertie dans une pièce (37) solidaire du premier élément du capteur (20, 40).

5. Moteur d'aéronef comprenant un ensemble selon l'une des revendications 1 à 4.

6. Vérin comprenant un dispositif de mesure selon l'une des revendications 1 à 4.

7. Doseur comprenant un dispositif de mesure selon l'une des revendications 1 à 4.

## Claims

1. Device for measuring the position of a piston (2) in a cylinder (1), extending along an axis, the device comprising at least two linear variable differential transformer (LVDT) type position sensors (3, 4), respectively comprising:
- a first sensor member integral with a supporting pallet (31) connected to the piston (2), the first sensor member comprising a stem (21) supporting a ferromagnetic core (20, 40),
- a second sensor member integral with the cylinder (1), comprising a transformer (10, 30),
the first and second members of each sensor being arranged to be movable in translation one relative to the other, along an axis parallel to the axis of the cylinder (1), the device being **characterised in that** the stems (21) of the first sensor members (20, 40) are integral with the same supporting pallet (31), which is connected to the piston (2) by a ball joint link (50).

2. Device according to claim 1, wherein the ball joint link (50) comprises a sphere (51) supported in a sphere flange (52).

3. Device according to claim 2, wherein the sphere flange (52) is integral with the first sensor member (20, 40).

4. Device according to claim 3, wherein the sphere flange (52) is crimped into a part (37) which is integral with the first sensor member (20, 40).

5. Aircraft engine comprising an assembly according to any of claims 1 to 4.

6. Jack comprising a measuring device according to any of claims 1 to 4.

7. Metering device comprising a measuring device according to any of claims 1 to 4.

## Patentansprüche

1. Vorrichtung zum Messen der Stellung eines Kolbens (2) in einem Zylinder (1), der sich entlang einer Achse erstreckt, wobei die Vorrichtung mindestens zwei Stellgeber (3, 4) des Typs induktiver Linearweggeber (LVDT) aufweist, die jeweils Folgendes umfassen:
- ein erstes Geberelement, das mit einer Halteplatte (31), die mit dem Kolben (2) verbunden ist, fest verbunden ist, wobei das erste Geberelement einen Stab (21) aufweist, der einen ferromagnetischen Kern (20, 40) trägt,
- ein zweites Geberelement, das mit dem Zylinder (1) fest verbunden ist und einen Transformator (10, 30) aufweist,
wobei das erste und das zweite Element jedes Gebers eingerichtet sind, um, entlang einer zu der Achse des Zylinders (1) parallelen Achse, zueinander verschiebbar zu sein, wobei die Vorrichtung **dadurch gekennzeichnet ist, dass** die Stäbe (21) der ersten Geberelemente (20, 40) mit ein und derselben Halteplatte (31), die mit dem Kolben (2) durch eine Gelenkverbindung (50) verbunden ist, fest verbunden sind.

2. Vorrichtung nach Anspruch 1, wobei die Gelenkverbindung (50) eine Kugel (51) umfasst, die in einem Kugelflansch (52) gehalten wird.

3. Vorrichtung nach Anspruch 2, wobei der Kugelflansch (52) mit dem ersten Geberelement (20, 40) fest verbunden ist.

4. Vorrichtung nach Anspruch 3, wobei der Kugelflansch (52) in ein Teil (37) eingequetscht ist, das mit dem ersten Geberelement (20, 40) fest verbunden ist.

5. Antrieb eines Luftfahrzeugs, der eine Anordnung nach einem der Ansprüche 1 bis 4 umfasst.

6. Heber, der eine Messvorrichtung nach einem der Ansprüche 1 bis 4 umfasst.

7. Dosiervorrichtung, die eine Messvorrichtung nach einem der Ansprüche 1 bis 4 umfasst.
